# EUROPEAN PATENT APPLICATION

(11) **EP 4 596 295 A1**
(43) Date of publication of application: **06.08.2025**
(21) Application number: 24220913.8
(22) Date of filing: 18.12.2024
(51) Int. Cl.: B60L 3/00, B60L 58/18, H02J 7/00

(54) **SYSTEM AND METHOD FOR DETERMINING THE POSITIONING OF A PLURALITY OF ENERGY SOURCES IN AN INDUSTRIAL VEHICLE FOR MOVING GOODS**

(30) Priority: 19.12.2023 IT 202300027156
(71) Applicant: Toyota Material Handling Manufacturing Italy S.p.A, 40132 Bologna (IT)
(72) Inventor: IOZZI, Daniele, 40126 BOLOGNA (IT); ROSSI, Matteo, 40010 SALA BOLOGNESE (BOLOGNA) (IT); FOLIGNO, Andrea, 40133 BOLOGNA (IT); GUIATI, Roberto, 40018 SAN PIETRO IN CASALE (IT)
(74) Representative: Casadei, Barbara

(57) **Abstract**

Described is a system for determining the positioning of a plurality of energy sources in an industrial vehicle for moving goods, the system (1) comprises an industrial vehicle (2) and a plurality of energy sources (4);
the industrial vehicle (2) comprises a plurality of housings (3) each of which is intended to housing one or more energy sources (4);
each housing (3) has respective electrical connection means (5) designed to be connected to a respective energy source (4);
the system (1) comprises a computer product configured to associate with each electrical connection means (5) a respective key to which a predetermined value corresponds;
each energy source (4) has a relative processing unit (4a) which is configured to determine a software identity (ID) having a respective value corresponding to the key of the electrical coupling means (5) to which the energy source (4) is connected.

## Description

This invention relates to a system for determining the positioning of a plurality of energy sources in an industrial vehicle for moving goods and the relative method.

This solution is used in industrial vehicles with multiple energy sources which require that each source has a relative separate identity, also in the software architecture of the vehicle.

This is because the lack of an association between the physical position of the source of energy in the machine and its unique "ID" does not allow the one or more energy sources to be identified with certainty, which causes a diagnostic error.

In this context, the need has been felt of uniquely associating the physical position of a specific source of energy in the machine with a relative software identifier by means of a system for determining the positioning of a plurality of energy sources in an industrial vehicle for moving goods as described in independent claim 1.

Advantageously, this association is useful in the case of remote data analyses, such as, for example, for diagnostic or data analysis purposes.

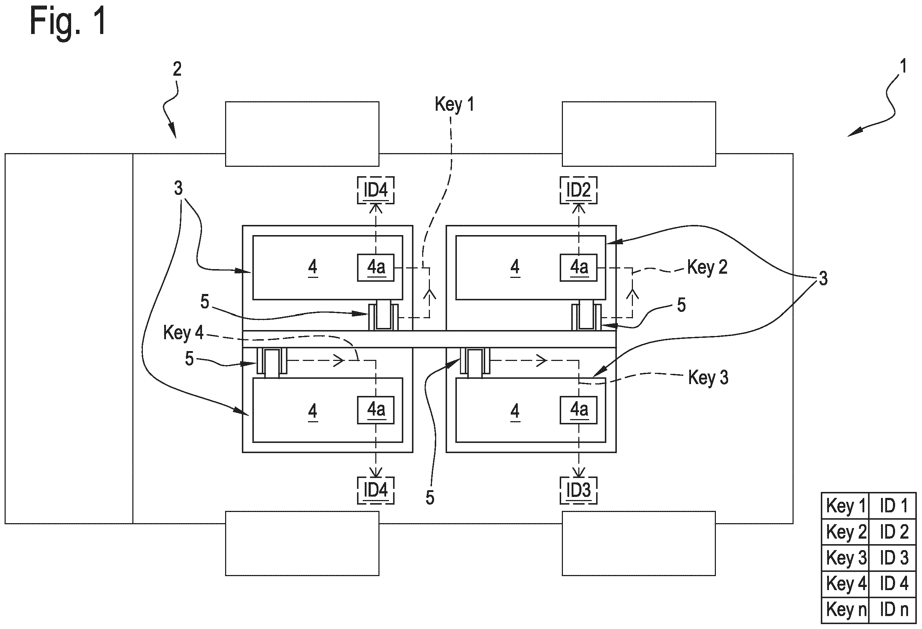

The features of the invention are clearly described in the claims below and its advantages are more apparent from the detailed description which follows, with reference to the accompanying Figure 1 which represents a schematic representation.

The numeral 1 denotes a system for determining the positioning of a plurality of energy sources in an industrial vehicle for moving goods.

The system 1 comprises an industrial vehicle 2 and a plurality of energy sources 4.

The industrial vehicle 2 is, for example, a tractor-trailer or a lift truck.

The industrial vehicle 2 comprises a plurality of housings 3 of respective energy sources 4.

It should be noted that each housing 3 is configured for housing one or more energy sources 4.

Preferably, and without limiting the scope of the invention, the energy sources 4 are identical in terms of energy capacity.

Alternatively, the energy sources 4 are different from each other or partly identical and partly different with reference to their energy capacity.

Each housing 3 has respective electrical connection means 5 designed to be connected to a respective energy source 4.

These may be in the form of a pinout, or a dedicated device, for example a sensor.

The system 1 comprises a computer product configured to associate with each electrical connection means 5 a respective key to which a predetermined value corresponds.

The value may be numeric, alphabetic or alphanumeric.

Each electrical coupling means 5 is associated with a respective key to which a predetermined value corresponds.

By way of example Key1, Key2, Key3, ...., Keyn.

Each energy source 4 has a relative processing unit 4a which is configured to determine a software identity "ID" having a respective value corresponding to the key of the electrical coupling means 5 to which the energy source is connected.

By way of example ID1, ID2, ID3, ...., IDn.

In this way, once the energy sources 4 are electrically connected to the respective electric coupling means 5, having a relative pinout, each processing unit 4a of the source 4 determines the software identity "ID" having the value corresponding to the key associated with the electric coupling means 5.

In relation to a key-value map, each energy source 4 will be identified by a relative software identity "ID" referred to a unique physical position, determined by the arrangement of the electrical coupling means 5.

The system 1 can therefore know with certainty that a software identity "ID" corresponds to a specific physical position and is able to associate the relative information.

The system 1 is able to increase the availability (total time in which the system is usable) by automatically intercepting and compensating for human errors.

This invention relates to a method for determining the positioning of the energy sources which comprises the steps of:
- associating with each electrical connection means 5 a respective IT type key to which a predetermined value corresponds;
- determining for each energy source 4 a software identity (ID) having a respective value corresponding to the key of the electrical coupling means 5 to which the energy source 4 is connected;
- in relation to a correspondence between the value of the key and the value of the identifier (ID), each energy source 4 is identified by a relative software identity (ID) referred to a unique physical position, determined by the arrangement of the electrical coupling means 5.

This association is advantageous in the case of analysis of data (for diagnostic or data analysis purposes, for example) with considerable savings in costs for operations.

A further advantage is the reduction of non-recurring costs, eliminating the design of mechanical error control systems, recurring costs, relative to the costs of implementing mechanical error control systems, minimising the possibility of human error and, in the case of faults, reducing intervention time.

## Claims

1. A system for determining the positioning of a plurality of energy sources in an industrial vehicle for moving goods comprising an industrial vehicle (2) and a plurality of energy sources (4);
the industrial vehicle (2) comprises a plurality of housings (3) each of which is configured for housing one or more energy sources (4);
each housing (3) has respective electrical connection means (5) designed to be connected to a respective energy source (4);
the system (1) comprises a computer product configured to associate with each electrical connection means (5) a respective key to which a predetermined value corresponds;
each energy source (4) has a relative processing unit (4a) which is configured to determine a software identity (ID) having a respective value corresponding to the key of the electrical coupling means (5) to which the energy source (4) is connected.

2. The system according to the preceding claim, **characterised in that** in relation to a correspondence between the value of the key and the value of the identifier (ID), each energy source (4) is identified by a relative software identity (ID) referred to a unique physical position, determined by the arrangement of the electrical coupling means (5).

3. The system according to any one of the previous claims, **characterised in that** the energy sources (4) are identical with reference to the energy capacity.

4. The system according to any one of the previous claims, **characterised in that** the energy sources (4) are different from each other or partly identical and partly different with reference to their energy capacity.

5. A method, actuated by a processor, for determining the positioning of a plurality of energy sources in an industrial vehicle for moving goods comprising an industrial vehicle (2) and a plurality of energy sources (4); the industrial vehicle (2) comprises a plurality of housings (3) each of which is configured for housing one or more energy sources (4);
each housing (3) has respective electrical connection means (5) designed to be connected to a respective energy source (4);
the method comprises the steps of:
- associating with each electrical connection means (5) a respective IT type key to which a predetermined value corresponds;
- determining for each energy source (4) a software identity (ID) having a respective value corresponding to the key of the electrical coupling means (5) to which the energy source (4) is connected;
- in relation to a correspondence between the value of the key and the value of the identifier (ID), each energy source (4) is identified by a relative software identity (ID) referred to a unique physical position, determined by the arrangement of the electrical coupling means (5).

6. The method according to preceding claim, **characterised in that** the step of identifying the software identity (ID) of each energy source (4) occurs once the energy source (4) is electrically connected to the respective electric coupling means (5), the software identity (ID) adopts a value corresponding to the key associated with the electric coupling means (5).

7. The method according to claim 5 or 6, **characterised in that** it determines a key-value map (Key-ID), wherein each energy source (4) will be identified by a relative software identity (ID) referred to a unique physical position, determined by the arrangement of the electrical coupling means (5).
